(19) Europäisches Patentamt

European Patent Office

Office européen des brevets

(11) **EP 4 202 207 A1**

(12) **EUROPEAN PATENT APPLICATION**

(43) Date of publication:
**28.06.2023 Bulletin 2023/26**

(51) International Patent Classification (IPC):
**F03D 7/02** (2006.01)

(21) Application number: **21383203.3**

(52) Cooperative Patent Classification (CPC):
**F03D 7/02;** F05B 2270/331; F05B 2270/807

(22) Date of filing: **23.12.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy Innovation &
Technology S.L.
31621 Sarriguren (Navarra) (ES)**

(72) Inventor: **The designation of the inventor has not yet been filed**

(74) Representative: **SGRE-Association
Siemens Gamesa Renewable
Energy GmbH & Co KG
Schlierseestraße 28
81539 München (DE)**

(54) **METHOD AND A DEVICE OF ESTIMATING AND CONTROLLING THE LOADS OF A WIND TURBINE**

(57) It is described a method of estimating and controlling the loads of a wind turbine (1). The wind turbine (1) comprising a tower (2), a nacelle (3) being mounted rotatable about a yaw axis (9) to the tower (2), a hub (4) being mounted rotatable about a rotation axis (8) to the nacelle (3), and at least one blade (6) being mounted to the hub (4). The method comprising the steps of: measuring an acceleration in a part of a wind turbine (1) by at least one accelerometer; calculating a first deflection estimate based on the measured acceleration; measuring an angular velocity in a part of the wind turbine (1) by at least one gyroscope; calculating a second deflection estimate based on the angular velocity; using the first and second deflection estimates to obtain a final deflection; comparing the final deflection with a threshold value and, if the final deflection exceeds the threshold value, derating or uprating an output of the wind turbine (1).

FIG 1

**Description**

Field of invention

The present invention relates to a method and a device of estimating and controlling the loads of a wind turbine.

Summary of the Invention

There may be a need for a method and a device of estimating and controlling the loads of a wind turbine, where tower parameters as the tower deflection and/or tower base bending moments (lateral and longitudinal) and/or shaft thrust or lateral forces can be measured to reduce the tower extreme and/or fatigue loads. This need may be met by the subject matters according to the independent claims. The present invention is further developed as set forth in the dependent claims.

According to the invention, a method and a device of estimating and controlling the loads of a wind turbine is provided. The wind turbine comprising a tower, a nacelle being mounted rotatable about a yaw axis to the tower, a hub being mounted rotatable about a rotation axis to the nacelle, and at least one blade being mounted to the hub. The method comprising the steps of: measuring an acceleration in a part of a wind turbine by at least one accelerometer; calculating a first deflection estimate based on the measured acceleration; measuring an angular velocity in a part of the wind turbine by at least one gyroscope; calculating a second deflection estimate based on the angular velocity; using the first and second deflection estimates to obtain a final deflection; comparing the final deflection with a threshold value and, if the final deflection exceeds the threshold value, derating or uprating an output of the wind turbine. The output can generally be meant in terms of electrical power or rotational speed, or it can be a setpoint of a wind turbine controller.

The accelerometer is preferably combined with the gyroscope in a combined IMU (accelerometer & gyroscope).

For example, the first and second, preferably two complementary, deflection estimates can be used to obtain the final deflection by combining measured acceleration and (by time integrated) angular velocity signals to predict tower deflections and loads based on the known structural dynamics of the Tower-Nacelle-Foundation system.

In an embodiment, a complementary filter approach can be used for the fusion of signals from the accelerometer and the gyroscope to determine the displacement in the longitudinal and lateral direction. The displacement signal is composed by an estimation based on the acceleration $x_a$ and angular velocity $x_b$ respectively (z corresponds to the z-transformed signal)

$$x = x_a + x_b = H(z)x_a + (1 - H(z))\, x_b = H(z)x_a + H_{comp}(z)\, x_b\,.$$

The $x_b$ signal is retrieved by processing IMU-turnrates with a so called leaky integrator. The function H(z) is composed by a superposition of high-pass/low-pass-filtered Transfer-Functions:

$$H(z) = H_1(z)H_{LP}(z) - H_2(z)H_{HP}(z)\,,$$

where $H_1$ and $H_2$ are based on $H_0$, but providing different values for [$m, d, k$] in terms of $m_1, m_2, k_1, k_2, d_1$ and $d_2$

$$H_0(z) = \frac{X(z)}{X_{ref}(z)} = \frac{2\, Z^2 + (-2gk_1\Delta t^2 - 4)Z + 2}{(2m + d\Delta t)Z^2 + (2gk_1\Delta t^2 - 4m)Z + (2m - d\Delta t)}\,\text{\¤}$$

In an embodiment, the derating or uprating is achieved by a pitch control of at least one blade.

In an embodiment, the final deflection and an orthogonal deflection are calculated.

In an embodiment, in each of an x-axis, a y-axis and a z-axis, a corresponding accelerometer and a corresponding gyroscope is arranged in the nacelle, preferably in a tower top. The method comprises a step of setting of the measured acceleration in a tower top acceleration equation $\ddot{x} - g\beta_y = acc_x$, wherein x is a tower top total displacement, $\beta y$ is a nacelle inclination angle that is a linear function of x and other known variables $c_y$ and hy(t), wherein $\beta_y = c_y x + h_y(t)$, and g is the gravitational acceleration, and by integrating the acceleration equation, $\ddot{x} + g\beta_y = acc_x$, the first deflection estimate $x_{acc}$ is obtained. By integrating an angular velocity $\dot{\beta}_y$ of the nacelle inclination angle $\beta y$, the nacelle inclination angle $\beta_y$ is obtained, and the second deflection estimate $x_{gyr}$ is obtained by setting $x_{gyr} = (\beta_y - h_y(t))/c_y$. The method comprises a step of combining $x_{acc}$ and $x_{gyr}$ using a complementary filter or any other method to obtain the final deflection $x_{final}$ with improved spectral properties. $c_y$ can be a function of the yaw angle. hy(t) can be a function of known variables, which can be generically expressed as a function of the time.

In an embodiment, the other known variables $c_y$ and $hy(t)$ are at least one of the further variables: shaft tilt and yaw bending moments, generator torque, measured acceleration, wind velocity, wind direction, rotor angular acceleration, nacelle angular accelerations and yaw angle.

In an embodiment, the nacelle inclination angle $\beta x$ and a further nacelle inclination angle $\beta y$ orthogonal thereto are based on a thermal rotation $\beta_{x, thermal}$, $\beta_{y, thermal}$ induced by a differential thermal expansion due to a temperature gradient in a cross section of the tower, wherein

$$\beta_y = c_y x + h_y(t) + \beta_{y,thermal} \text{ and } \beta_x = c_x y + h_x(t) + \beta_{x,thermal} \cdot$$

In an embodiment, the nacelle inclination angle $\beta x$ and the further nacelle inclination angle $\beta y$ are corrected by mounting errors $\beta_{x, mounting\ error}$, $\beta_{y, mounting\ error}$, so that

$$\beta_y = c_y x + h_y(t) + \beta_{y,thermal} + \beta_{y,mounting\_error} \text{ and } \beta_x = c_x y + h_x(t) +$$
$$\beta_{x,thermal} + \beta_{x,mounting\_error} \cdot$$

In an embodiment, at least one of a tower base longitudinal bending moment, a tower lateral bending moment, a tower foundation longitudinal angle, a tower foundation lateral angle, a nacelle longitudinal rotation angle, a nacelle lateral rotation angle, a hub longitudinal force and a hub lateral force are obtained as a function of at least one of the parameters such as final deflection and the orthogonal deflection, a shaft tilt bending moment and a yaw bending moment, a generator torque, a measured acceleration, a wind velocity, a wind direction, a rotor angular acceleration, a nacelle angular accelerations and a yaw angle. Any one of the previous relationships can use at least one of the following parameters: a tower modal shape, wind turbine generic data such as a shaft tilt angle, a nacelle mass, a nacelle inertia, a foundation inertia, a foundation stiffness, a nacelle overhang, a hub mass, a gearbox ratio, a generator inertia, a rotor mass, a tower mass and a tower distribution such as a diameter, a stiffness, a mass, a drag.

In an embodiment, the thermal rotations $\beta_{x, thermal}$, $\beta_{y, thermal}$ are such that filtered hub longitudinal and/or lateral forces are equal to a filtered alternative hub longitudinal and/or lateral forces estimation.

In an embodiment, the thermal rotations $\beta_{x, thermal}$, $\beta_{y, thermal}$ are calculated using temperature sensors distributed in the tower.

In an embodiment, the mounting errors $\beta_{x, mounting\ error}$, $\beta_{y, mounting\ error}$ are such that filtered hub longitudinal and/or lateral forces are equal to a filtered alternative hub longitudinal and/or lateral force estimation; wherein an evaluation of the mounting errors $\beta_{x, mounting\ error}$, $\beta_{y, mounting\ error}$ is performed when the thermal rotations $\beta_{x, thermal}$, $\beta_{y, thermal}$ are known to be zero or negligible.

In an embodiment, the comparing of the final deflection with the threshold value is made by use of a look-up table.

In an embodiment, the accelerometer and gyroscope measurements are provided by a single device, such as an Inertial-Measurement-Unit sensor.

For example, information from a three accelerometer and three a three-axial gyroscope, which are located at the nacelle (or at any other location along the tower), are used in combination with the equations that governs the dynamics of the tower. By using all the previous information, a closed system of equations can be obtained to estimate the following variables:

- Tower base lateral and longitudinal bending moments;
- Tower base lateral and longitudinal foundation angles;
- Tower top (or nacelle) rotation angles;
- Hub or rotor forces.

Once the tower longitudinal deflection is obtained, it can be compared with data in a look-up table containing a maximum tower longitudinal deflection desired versus power. If the actual deflection is higher than the tabulated limit, a collective pitch action can be triggered to reduce thrust and consequently reduce tower base loads.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1     shows a wind turbine and the different elements thereof;

Fig. 2     shows a wind turbine with main acting forces, rotations and displacements acting thereon; and

Fig. 3     shows a nacelle with forces and displacements acting thereon.

Detailed Description

The illustrations in the drawings are schematically. It is noted that in different figures, similar or identical elements are provided with the same reference signs.

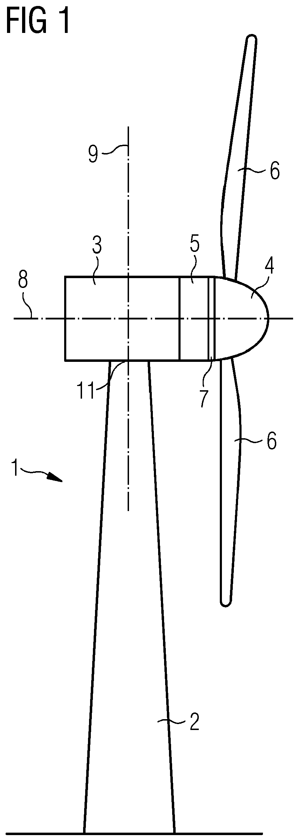

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gearless, direct-driven wind turbine. Such a generator 5 is referred as direct drive generator 5. As an alternative, the hub 4 may also be connected to the generator 5 via a shaft and a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

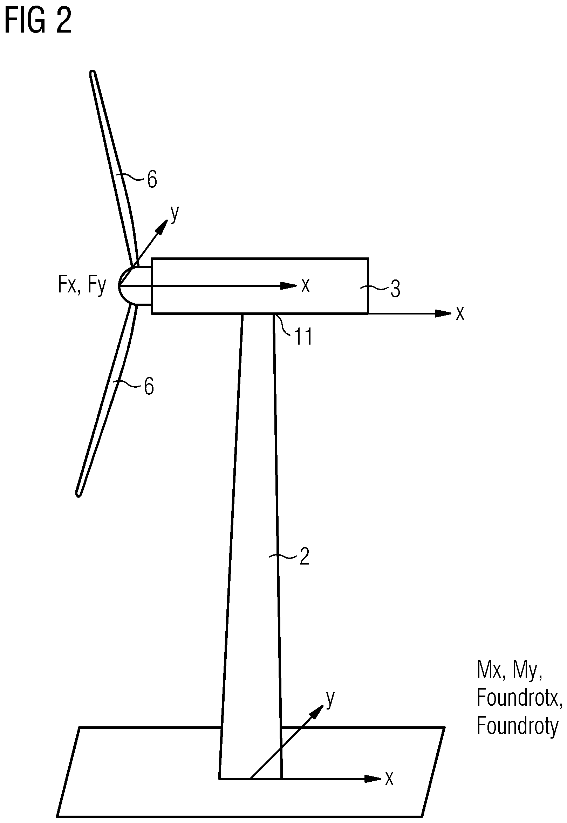

**Fig. 2** shows the wind turbine 1 with main acting forces, rotations and displacements acting thereon. The x-axis is in parallel to the rotation axis 8, and the y-axis is perpendicular to the x-axis, and both are located in a horizontal plane. A z-axis (not shown) is a vertical axis being in parallel to the yaw axis and perpendicular to the x- and y-axes. Fx and Fy are forces acting on the hub 4. Ux, Uy, $\beta x$, $\beta y$ are displacements and inclination angles of the nacelle 3. Mx, My, Foundrotx, Foundroty are moments and inclination angles acting on a bottom (a foundation) of the tower 2, respectively.

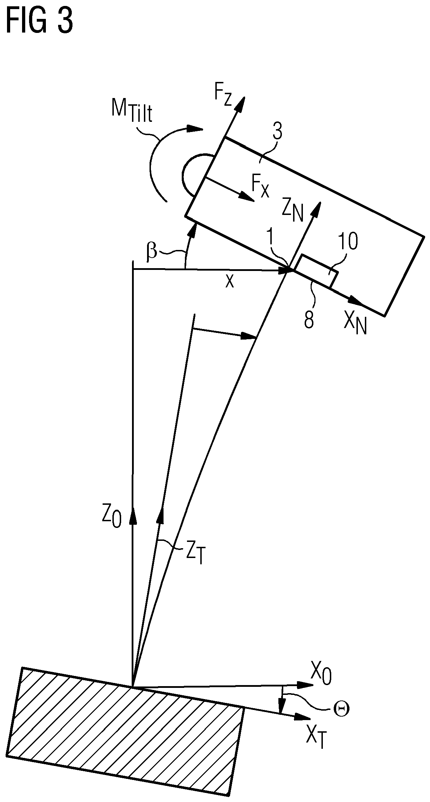

**Fig. 3** shows the nacelle 3 with forces and displacements acting thereon according to an embodiment. $\beta$ is an inclination angle M is a shaft tilt bending moment. Reference sign 10 designates an accelerometer.

The method of estimating and controlling the loads of a wind turbine 1 comprising the steps of measuring an acceleration acc in a part of a wind turbine 1 by at least one accelerometer 10; calculating a first deflection estimate $x_{acc}$ based on the measured acceleration acc; measuring an angular velocity in a part of the wind turbine 1 by at least one gyroscope; calculating a second deflection estimate $x_{gyro}$ based on the angular velocity; combining the first and second deflection estimates to obtain a final deflection $x_{final}$; comparing the final deflection $x_{final}$ with a threshold value, and, if the final deflection $x_{final}$ exceeds the threshold value, derating or uprating an output of the wind turbine 1.

The derating or uprating can be achieved by a pitch control of the at least one blade 6.

In addition to the final deflection $x_{final}$, an orthogonal deflection $y_{final}$ can be calculated.

Preferably, in each of an x-axis, a y-axis and a z-axis, a corresponding accelerometer 10 and a corresponding gyroscope can be arranged in the nacelle 3, preferably in a tower top 11. In Fig. 3, the accelerometer 10 can be combined with the gyroscope in a combined IMU (accelerometer & gyroscope). Alternatively, the accelerometer 10 and the gyroscope can also be located at two different positions.

The method can comprise a step of setting the measured acceleration acc in a tower top acceleration equation $\ddot{x} - g\beta_y = acc_x$, wherein x is a tower top total displacement, $\beta y$ is a nacelle inclination angle that is a linear function of x and other known variables $c_y$ and hy(t) wherein $\beta_y = c_y x + h_y(t)$, and g is the gravitational acceleration, and by integrating, preferably of a stabilized version of the acceleration equation, $\ddot{x} + g\beta_y = acc_x$, the first deflection estimate $x_{acc}$ is obtained. By integrating an angular velocity $\dot{\beta}_y$ of the nacelle inclination angle $\beta y$, the nacelle inclination angle $\beta_y$ can be obtained, and the second deflection estimate $x_{gyr}$ is obtained by setting $x_{gyr} = (\beta_y - h_y(t))/c_y$. Then, $x_{acc}$ and $x_{gyr}$ can be combined using a complementary filter to obtain the final deflection $x_{final}$ with improved spectral properties. $c_y$ can be a constant, for example a function of the yaw angle. hy(t) can be a function of known variables, which can be generically expressed as a function of the time.

The other known variables $c_y$ and hy(t) can be at least one of the further variables: shaft tilt and yaw bending moments, generator torque, measured acceleration acc, wind velocity, wind direction, rotor angular acceleration, nacelle angular accelerations and yaw angle.

The nacelle inclination angle βx and a further nacelle inclination angle βy orthogonal thereto can be based on a thermal rotation $\beta_{x,\,thermal}$, $\beta_{y,\,thermal}$ induced by a differential thermal expansion due to a temperature gradient in a cross section of the tower 2, wherein

$$\beta_y = c_y x + h_y(t) + \beta_{y,thermal} \ \ \text{and} \ \ \beta_x = c_x y + h_x(t) + \beta_{x,thermal} .$$

The thermal rotations $\beta_{x,\,thermal}$, $\beta_{y,\,thermal}$ can be such that filtered hub longitudinal and/or lateral forces Fx, Fy are equal to a filtered alternative hub longitudinal and/or lateral forces estimation. The thermal rotations $\beta_{x,\,thermal}$, $\beta_{y,\,thermal}$ can be calculated using temperature sensors distributed in the tower 2.

The nacelle inclination angle βx and the further nacelle inclination angle βy can be corrected by mounting errors $\beta_{x,\,mounting\,error}$, $\beta_{y,\,mounting\,error}$, so that

$$\beta_y = c_y x + h_y(t) + \beta_{y,thermal} + \beta_{y,mounting\_error}$$

and

$$\beta_x = c_x y + h_x(t) + \beta_{x,thermal} + \beta_{x,mounting\_error} .$$

The mounting errors $\beta_{x,\,mounting\,error}$, $\beta_{y,\,mounting\,error}$ can be such that filtered hub longitudinal and/or lateral forces (Fx, Fy) are equal to a filtered alternative hub longitudinal and/or lateral force estimation; wherein an evaluation of the mounting errors $\beta_{x,\,mounting\,error}$, $\beta_{y,\,mounting\,error}$ can be performed when the thermal rotations $\beta_{x,\,thermal}$, $\beta_{y,\,thermal}$ are known to be zero or negligible.

Preferably, at least one of a tower base longitudinal bending moment My, a tower lateral bending moment Mx, a tower foundation longitudinal angle FoundRoty, a tower foundation lateral angle FoundRotx, a nacelle longitudinal rotation angle $\beta_y$, a nacelle lateral rotation angle $\beta_x$ which is orthogonal to $\beta_y$, a hub longitudinal force Fx and a hub lateral force Fy are obtained as a function of at least one of the parameters such as final deflection $x_{final}$ and the orthogonal deflection $y_{final}$, a shaft tilt bending moment, a yaw bending moment, a generator torque, a measured acceleration acc, a wind velocity, a wind direction, a rotor angular acceleration, a nacelle angular accelerations and a yaw angle.

Any one of the previous relationships can use at least one of the following parameters: a tower modal shape; wind turbine generic data such as a shaft tilt angle, a nacelle mass, a nacelle inertia, a foundation inertia, a foundation stiffness, a nacelle overhang, a hub mass, a gearbox ratio, a generator inertia, a rotor mass, a tower mass and a tower distribution such as a diameter, a stiffness, a mass, a drag.

The comparing of the final deflection $x_{final}$ with the threshold value can be made by use of a look-up table.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

**Claims**

1. A method of estimating and controlling the loads of a wind turbine (1), the wind turbine (1) comprising a tower (2), a nacelle (3) being mounted rotatable about a yaw axis (9) to the tower (2), a hub (4) being mounted rotatable about a rotation axis (8) to the nacelle (3), and at least one blade (6) being mounted to the hub (4); the method comprising the steps of:

    measuring an acceleration (acc) in a part of a wind turbine (1) by at least one accelerometer (10);
    calculating a first deflection estimate ($x_{acc}$) based on the measured acceleration (acc);
    measuring an angular velocity in a part of the wind turbine (1) by at least one gyroscope;
    calculating a second deflection estimate ($x_{gyro}$) based on the angular velocity;
    using the first and second deflection estimates ($x_{acc}$, $x_{gyro}$) to obtain a final deflection ($x_{final}$);

comparing the final deflection ($x_{final}$) with a threshold value, and
if the final deflection ($x_{final}$) exceeds the threshold value, derating or uprating an output of the wind turbine (1) .

2. The method according to the preceding claim, wherein
the derating or uprating is achieved by a pitch control of the at least one blade (6).

3. The method according to any one of the preceding claims, wherein
the final deflection ($x_{final}$) and an orthogonal deflection ($y_{final}$), which is orthogonal to the final deflection ($x_{final}$), are calculated.

4. The method according to any one of the preceding claims, wherein

in each of an x-axis, a y-axis and a z-axis, a corresponding accelerometer (10) and a corresponding gyroscope are arranged in the nacelle (3) or a tower top (11); and
the method comprises a setting of the measured acceleration (acc) in a tower top acceleration equation $\ddot{x}$ — $g\beta_y = acc_x$, wherein x is a tower top total displacement, $\beta$y is a nacelle inclination angle that is a linear function of x and other known variables $c_y$ and hy(t), with $\beta_y = c_y x + h_y(t)$, and g is the gravitational acceleration, and by integrating the acceleration equation, $\ddot{x} + g\beta_y = acc_x$, the first deflection estimate $x_{acc}$ is obtained; wherein by integrating an angular velocity ($\dot{\beta}_y$) of the nacelle inclination angle $\beta$y, the nacelle inclination angle $\beta$y is obtained, and the second deflection estimate $x_{gyr}$ is obtained by setting $x_{gyr} = (\beta_y - h_y(t))/c_y$; and considering $x_{acc}$ and $x_{gyr}$ using a complementary filter to obtain the final deflection ($x_{final}$) with improved spectral properties.

5. The method according to the preceding claim, wherein
the other known variables $c_y$ and hy(t) are at least one of the further variables: shaft tilt and yaw bending moments, generator torque, measured acceleration (acc), wind velocity, wind direction, rotor angular acceleration, nacelle angular accelerations and yaw angle.

6. The method according to any one of claims 4 and 5, wherein
the nacelle inclination angle $\beta$x and a further nacelle inclination angle $\beta$y orthogonal thereto are based on a thermal rotation $\beta_{x, thermal}$, $\beta_{y, thermal}$ induced by a differential thermal expansion due to a temperature gradient in a cross section of the tower, wherein

$$\beta_y = c_y x + h_y(t) + \beta_{y,thermal}$$

and

$$\beta_x = c_x y + h_x(t) + \beta_{x,thermal} \cdot$$

7. The method according to the preceding claim, wherein
the thermal rotations $\beta_{x, thermal}$, $\beta_{y, thermal}$ are such that filtered hub longitudinal and/or lateral forces (Fx, Fy) are equal to a, preferably filtered, alternative hub longitudinal and/or lateral force estimation or measurement.

8. The method according to any one of claims 6 and 7, wherein
the thermal rotations $\beta_{x, thermal}$, $\beta_{y, thermal}$ are calculated using temperature sensors distributed in the tower (2).

9. The method according to any one of the preceding claims 6 to 8, wherein
the nacelle inclination angle $\beta$x and the further nacelle inclination angle $\beta$y are corrected by mounting errors $\beta_{x, mount-ing error}$, $\beta_{y, mounting error}$, so that

$$\beta_y = c_y x + h_y(t) + \beta_{y,thermal} + \beta_{y,mounting\_error} \text{ and } \beta_x = c_x y + h_x(t) + \beta_{x,thermal} + \beta_{x,mounting\_error} \cdot$$

10. The method according to the preceding claim, wherein

the mounting errors $\beta_{x, mounting\ error}$, $\beta_{y, mounting\ error}$ are such that filtered hub longitudinal and/or lateral forces (Fx, Fy) are equal to a, preferably filtered, alternative hub longitudinal and/or lateral force estimation or measurement; wherein

an evaluation of the mounting errors $\beta_{x, mounting\ error}$, $\beta_{y, mounting\ error}$ is performed when the thermal rotations $\beta_{x, thermal}$, $\beta_{y, thermal}$ are known to be zero or negligible.

11. The method according to any one of the preceding claims, wherein

at least one of a tower base longitudinal bending moment (My), a tower lateral bending moment (Mx), a tower foundation longitudinal angle (FoundRoty), a tower foundation lateral angle (FoundRotx), a nacelle longitudinal rotation angle ($\beta_y$), a nacelle lateral rotation angle ($\beta_x$), a hub longitudinal force (Fx) and a hub lateral force (Fy) are obtained as a function of at least one of the parameters such as final deflection ($x_{final}$), the orthogonal deflection ($y_{final}$), a shaft tilt bending moment, a yaw bending moment, a generator torque, a measured acceleration (acc), a wind velocity, a wind direction, a rotor angular acceleration, a nacelle angular accelerations and a yaw angle; and

any one of the previous relationships use at least one of the following parameters:

a tower modal shape;
wind turbine generic data such as a shaft tilt angle, a nacelle mass, a nacelle inertia, a foundation inertia, a foundation stiffness, a nacelle overhang, a hub mass, a gearbox ratio, a generator inertia, a rotor mass, a tower mass and a tower distribution such as a diameter, a stiffness, a mass, a drag.

12. The method according to any one of the preceding claims, wherein
the comparing of the final deflection ($x_{final}$) with the threshold value is made by use of a look-up table.

13. The method according to any one of the preceding claims, wherein
the accelerometer and gyroscope measurements are provided by a single device, such as an Inertial-Measurement-Unit sensor.

14. A device for estimating and controlling the loads of a wind turbine (1), the wind turbine (1) comprising a tower (2), a nacelle (3) being mounted rotatable about a yaw axis (9) to the tower (2), a hub (4) being mounted rotatable about a rotation axis (8) to the nacelle (3), and at least one blade (6) being mounted to the hub (4); the device comprising:

a first measuring unit configured to measure an acceleration (acc) in a part of a wind turbine (1) by at least one accelerometer (10);
a first calculating unit configured to calculate a first deflection estimate ($x_{acc}$) based on the measured acceleration (acc);
a second measuring unit configured to measure an angular velocity in a part of the wind turbine (1) by at least one gyroscope;
a second calculating unit configured to calculate a second deflection estimate ($x_{gyro}$) based on the angular velocity;
a combining unit configured to use the first and second deflection estimates to obtain a final deflection ($x_{final}$);
a comparing unit configured to compare the final deflection ($x_{final}$) with a threshold value and, if the final deflection ($x_{final}$) exceeds the threshold value, to derate or uprate an output of the wind turbine (1).

## FIG 1

# FIG 2

Fx, Fy

6

6

y

x

X

3

11

2

y

x

Mx, My,
Foundrotx,
Foundroty

FIG 3

Europäisches
Patentamt

European
Patent Office

Office européen
des brevets

# EUROPEAN SEARCH REPORT

Application Number

EP 21 38 3203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/139863 A1 (VESTAS WIND SYS AS [DK]) 15 July 2021 (2021-07-15) | 1-3, 11-14 | INV.<br>F03D7/02 |
| A | * claims 1,7,8,10,14,18; figures 2-4 *<br>* page 1, lines 11-14 *<br>* page 6, lines 15-31 *<br>* page 7, line 31 – page 8, line 4 *<br>* page 10, lines 21-26 *<br>* page 9, line 26 – page 10, line 3 * | 4-10 | |
| X | WO 2021/121527 A1 (GRAM OG JUHL AS [DK]) 24 June 2021 (2021-06-24)<br>* page 27, line 31 – page 44, line 29 *<br>* page 8, lines 31-34; claim 20 * | 1-3, 11-14 | |
| A | A. D. Wright: "Modern Control Design for Flexible Wind Turbines",<br>,<br>31 July 2004 (2004-07-31), XP055391529,<br>DOI: 10.2172/15011696<br>Retrieved from the Internet:<br>URL:https://www.google.nl/url?sa=t&rct=j&q=&esrc=s&source=web&cd=1&ved=0ahUKEwip_r7035DVAhUML1AKHftFCJ0QFggmMAA&url=http://citeseerx.ist.psu.edu/viewdoc/download?doi=10.1.1.468.5499&rep=rep1&type=pdf&usg=AFQjCNHMxrzchbKC0EI4o4GshFRAEQtRjQ<br>[retrieved on 2017-07-17]<br>* pages 55,56, paragraph 5.5.2 * | 4-10 | TECHNICAL FIELDS SEARCHED (IPC)<br><br>F03D |

The present search report has been drawn up for all claims

| Place of search | Date of completion of the search | Examiner |
|---|---|---|
| The Hague | 13 June 2022 | Król, Marcin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 38 3203

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2022

| Patent document cited in search report | | Publication date | Patent family member(s) | | Publication date |
|---|---|---|---|---|---|
| WO 2021139863 | A1 | 15-07-2021 | NONE | | |
| WO 2021121527 | A1 | 24-06-2021 | DK | 201970809 A1 | 28-07-2021 |
| | | | WO | 2021121527 A1 | 24-06-2021 |

EPO FORM P0459

For more details about this annex : see Official Journal of the European Patent Office, No. 12/82